# EUROPEAN PATENT SPECIFICATION

(11) **EP 3 878 712 B1**
(45) Date of publication and mention of the grant of the patent: **07.06.2023**
(21) Application number: 20215103.1
(22) Date of filing: 17.12.2020
(51) Int. Cl.: B62B 1/18, B62B 5/00

(54) **MOTORIZED WHEELBARROW**
MOTORISIERTE SCHUBKARRE
BROUETTE MOTORISÉE

(30) Priority: 13.03.2020 SI 202000048
(43) Date of publication of application: 15.09.2021
(73) Proprietor: BLOCKHAPP, razvoj in svetovanje, d.o.o., 1000 Ljubljana (SI)
(72) Inventor: Makarovic, Marko, 1000 Ljubljana (SI)
(74) Representative: Golmajer Zima, Marjanca

(56) References cited:
- EP-A1- 0 913 311
- CN-A- 102 582 667
- US-A1- 2017 225 700

## Description

### FIELD OF INVENTION

The present invention relates to a wheelbarrow, such as a single-wheeled transport trolley with manual push, and in particular to a wheelbarrow provided with an electric motor having an electric motor to assist in moving the wheelbarrow.

### TECHNICAL PROBLEM

A wheelbarrow, such as a hand-pushed single-wheeled transport trolley, is well passable on narrow paths and is often used to transport materials, parts, harvest or fertilizer in workplaces, fields, orchards, mountains or forests. As the wheelbarrow needs to be pushed by hand, manipulating it on poorly maintained paths, meadows or steep slopes is difficult, so the scope of its use is limited. When manipulating the wheelbarrow, it is necessary to push or brake, maintain forward/backward balance and left/right balance. Transporting goods on rough terrain is therefore often difficult, especially for occasional users such as amateur workers maintaining courtyards, houses, gardens and amateur food growers. The need to use a wheelbarrow at a remote location often arises.

### PRIOR ART

These generally known issues give rise to many attempts to develop a convincing product.

Patent WO1992007747A1 proposes a solution to the forward/backward weight balance, in which all drive elements and part of the load space are placed above the wheel axle.

EP0867353A2 proposes an intuitive solution to controlling including a movable handle.

The left/right weight balance is solved by placing the batteries in different positions of the frame.

US2002/0084119A1 solves the weight balance by integrating the motor into the wheelbarrow wheel and the battery under the container.

DE202012009715U1 solves the weight balance by integrating the motor and batteries into the wheelbarrow wheel.

US 2017/225700 A1 (Snyder) describes a power assisted wheelbarrow having a gyroscopically-responsive power assisted moment arm. A moment arm extends to a pivot point such that when a longitudinal force is applied at the moment arm, a sensor senses such force and outputs an energizing signal to a motor to drive a wheel. If a rotational or vertical force is applied to the moment arm, the motor need not be driven. According to the invention, therefore, a power assist can be provided to a user to drive a wheel in a desired direction of transport while not causing drive during tipping or unloading of the load carrying portion of the vehicle.

EP 0913311 A1 (Miyazaki, et al) describes a motor-assisted single-wheel cart which is provided with a motor for generating an assisting power in response to an operation force when operating an operation handle by a human hand, and a power transmission mechanism for transmitting an output of the motor to an axle. The motor is arranged rearwardly upwardly of the axle so as to be positioned within a space surrounded by an upper horizontal member and a lower member positioned below the upper horizontal member constituting a vehicle body frame constituting the cart when viewing the vehicle body frame from a side surface thereof. The power transmission mechanism has a first speed reduction mechanism arranged near the motor, a second speed reduction mechanism arranged near the wheel and a transmission shaft for connecting them. The transmission shaft is inserted to the first and second speed reduction mechanisms so as to be capable of being drawn out.

Due to the need for an easy transport of wheelbarrows, wheelbarrows with folding handles are already available on the market.

The solutions proposed so far do not provide an intuitive use comparable to a non-motorized wheelbarrow.

Known solutions to motorised wheelbarrows use a sliding lever or switch to control the drive.

Known battery placement solutions position the battery in a way that the centre of gravity of the battery is above the neutral axis, which raises the total centre of gravity even further from the neutral axis.

### DESCRIPTION

The invention is based on the background described so far and aims to provide a single-wheel transport trolley with manual push, in which the auxiliary force of the electric motor acts effectively on the wheel to reduce the required force exerted by arms, while reducing battery power consumption and weight balance around the neutral axis is similar to that of a non-motorized wheelbarrow. The wheelbarrow should be intuitively manageable and easy to transport, and its stored energy and unoccupied volume should also be used for other purposes.

In order to achieve the above identified purpose, the invention provides a wheelbarrow as defined in claim 1. Preferred embodiments are defined in the dependent claims. A wheelbarrow with an electric drive is proposed, which comprises: a frame for a container; a wheel mounted in the middle of the lower part of the frame of the container; right and left handle supports extending backwards from two sides of the frame for the container; a left and right leg, which are an integral part of the frame; an electric motor mounted in said wheel, which drives or brakes the wheelbarrow only when necessary; two separate batteries mounted in a protective housing attached to said legs; two handles overlapping to a limited extent said pair of supports which are fixed with respect to said supports; a contactless sensor for detecting the position of a hand that is attached to one of said handle supports; a multi-axis acceleration sensor rigidly connected to said frame, buttons accessible by a finger while simultaneously holding said handles; and a control system for monitoring the operation of said electric motor based on motor controller information, detected values of sensors for detecting the position of the user's hand, wheelbarrow position, temperature sensors of each battery, and allowing a selection of different operating modes according to the sequence of pressing said button.

The pushing forces acting on the handles are detected via a small movement of the hands in the forward/backward direction. The hand position sensor transmits a signal to the wheelbarrow controller so that the motor can drive the wheelbarrow according to push forces and manual work can be reduced, so a fully loaded wheelbarrow can be pushed onto a rough or gravel surface. With an empty container or in a slightly filled state on a level ground, the energy consumption of the battery can be reduced by not activating the electric motor.

In addition, the wheelbarrow is pushed by lifting the handles and then the pushing force acts on the handles. Especially if the load is transported on rough terrain or a slope, the position of the frame of the container may become unstable. Loss of balance is often further caused by the push of the grip of the handle on one side. Thus, the hand displacement sensor can detect the push forces that need to be applied to the grip in order to apply the correct traction force to the wheel.

The position of compact separate batteries allows for an optimal compromise between left/right and forward/backward balance, greater stability and easier manipulation with the container fully loaded or empty. The choice of modem batteries allows for a suitable compact installation and ensures great autonomy of operation. The battery installation method provides user protection against possible explosion of the battery and at the same time protects the battery from mechanical damage. Placing the battery in the housing, which is an integral part of the legs of the support frame, allows adequate cooling of the batteries and preserves the space under the container for the attachment of other electrical devices.

The use of a suitably large wheel allows the use of standard winter-profile tyres for scooters, which ensures better grip of the drive wheel on slippery surfaces at an acceptable cost, while allowing significantly smoother driving compared to tractor-profile tyres, which is especially noticeable on smooth hard surfaces.

Short overall length of the wheelbarrow and flanges built into the legs of the support frame for attaching the transport support contribute to an easy transport of the wheelbarrow on a towing hitch of a passenger car.

### SHORT DESCRIPTION OF DRAWINGS

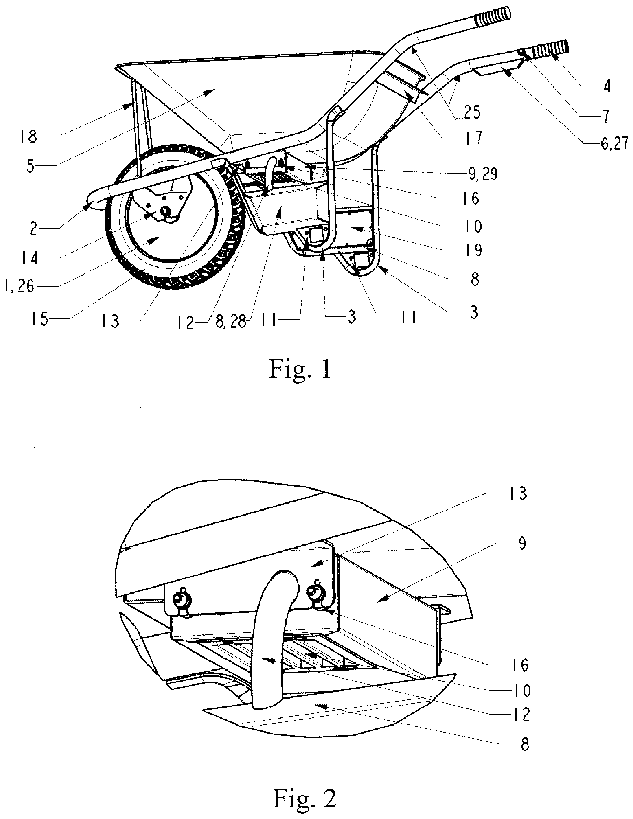

Figure 1 shows a preferred construction of a wheelbarrow with basic structural elements; a wheel 1 with a built-in motor 26; a support frame 2 of the wheelbarrow, two support legs 3 that are an integral part of the support frame 2; plastic handles 4 fixed to the support frame 2; a container 5 for transporting load; a shield 6 of a hand movement sensor; a button 7; a battery housing 8; a control unit housing 9; a cooling part 10 of the engine power controller; a mounting flange 11 of a leg for attaching a support to a towing hitch; a protective tube 12 for conductors connecting the battery and the control unit, which protective tube is rigidly connected to the battery housing 8 and a support 13; a support 13 which rigidly connects the container 5 to the frame 2, and the control unit housing 9 via damping elements 16; a wheel support 14; a tyre 15; an elastic damping element 16; a support 17 that rigidly connects the container 5 to the frame 2; a support 18 that rigidly connects the front portion of the container 5 and the front portion of the frame 2; a battery housing cover 19.
Figure 2 shows a detailed view of the control part mounting.

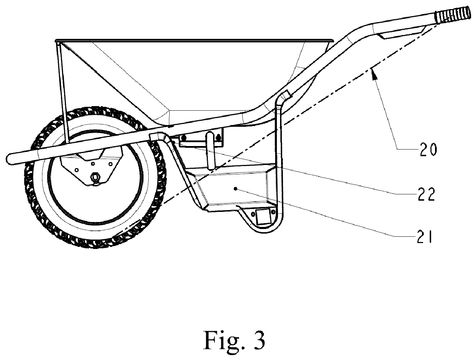

Figure 3 shows a side view showing a neutral axis 20 and the positions of the centre 21 of gravity of batteries and the centre 22 of gravity of the entire wheelbarrow.

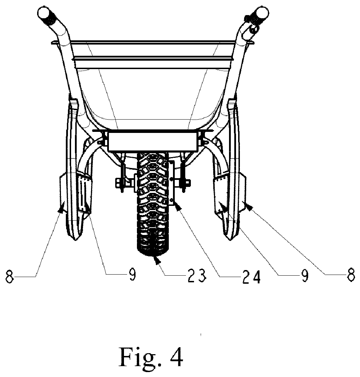

Figure 4 shows a wheelbarrow with designated components of the battery housing 8 and the battery housing cover 19, a tyre 15 with a tread pattern having grooves 23, and the mounting flange 24 of the wheel.

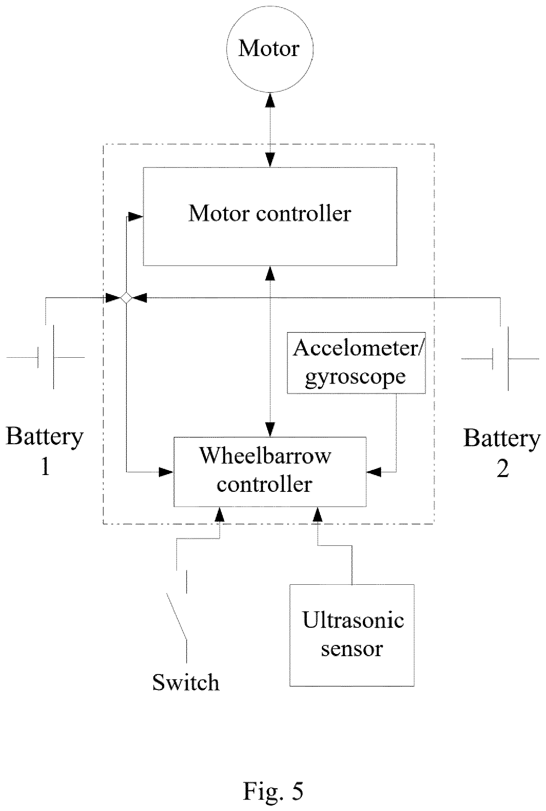

Figure 5 shows a preferred control diagram of the wheelbarrow drive. The control unit housing 9 accommodates a motor controller, a wheelbarrow controller, an accelerometer and a gyroscope. In the control unit housing 9, conductors from both batteries 28 are connected and supply the motor controller and the wheelbarrow controller. Conductors from a switch, a hand position sensor, which is an ultrasonic sensor, the motor 26 and both batteries 28 are led into the control unit housing 9.

The wheel 1 comprises a wheel rim and a built-in motor 26, and is attached via a shaft to a wheel support 14 via a preferably form-fit connection. On one side of the motor 26, there is a mounting position of the wheel, preferably a perforated flange 24 which is preferably rigidly attached to the motor cover. Preferably, the rim is adapted to tubeless tyres having dimensions 3.00-10.

The support frame 2 is preferably made of a steel tube, preferably of round cross-section.

The support legs 3 are preferably made of a curved steel L-profile and are preferably welded to the support frame 2.

The plastic handles 4 are preferably round in shape and preferably glued to the tube of the support frame 2.

The container 5 is preferably made of sheet steel and is preferably welded to the support frame 2 via supports 13 and 17.

The shield 6 of the hand movement sensor is preferably circular in shape and preferably welded to the support frame 2, preferably positioned on the underside.

The button 7 is - preferably via an intermediate flange - preferably welded to the support frame 2, preferably positioned so that its upper edge does not reach the upper point of the support frame 2 at this point in height.

The battery housing 8 is preferably made of sheet steel and is preferably welded to the supported legs 3. It is configured in a way to form, together with the battery housing cover 19, an enclosed space of such a size that it embraces the battery together with the surrounding damping element, which preferably at the same time provides good thermal conductivity.

The control unit housing 9 is preferably made of sheet steel and preferably encloses the power motor controller and the wheelbarrow controller in a watertight manner. The control unit housing 9 is preferably attached to the support 13 via cylindrical damping elements 16 by a screw connection.

The cooling part 10 of the power motor controller has free access to the environmental air so as to provide sufficient cooling.

The two mounting flanges 11 of the supporting legs with a form-fit connection, preferably with a rectangular cut-out, allow for adequate rigidity of the connection with the support for connection to the towing hitch.

The protective tube 12 is preferably made of a curved steel tube and is preferably welded on one side to the battery housing 8 and on the other side to the support 13.

The support 13 is preferably made of sheet steel and is preferably welded to the support frame 2.

The wheel support 14 is preferably made of sheet steel and is preferably welded to the support frame 2.

The tyre 15 is preferably a winter tyre for scooters.

The elastic damping element 16 is preferably fastened by a screw connection to the control unit housing 9 and the support 13, and is dimensioned to prevent the transmission of shocks from the support frame 2 to the control unit housing 9.

The support 17 is preferably made of sheet steel and connects the rear part of the container 5 with the rear part of the support frame 2 preferably via a welded joint.

The support 18 is preferably made of a curved steel bar and connects the front part of the container 5 with the front part of the support frame 2 preferably via a welded joint.

The battery housing cover 19 is preferably made of sheet steel and is preferably fastened to the battery housing 8 with a screw connection.

The neutral axle 20 extends from the grip of the hand with the handle to the junction of the tyre with the ground.

The position of the centre 21 of gravity of the batteries, far below the neutral axis 20, makes it possible to compensate for the unfavourable location of the centre of gravity of the motor and the centre of gravity of the container above the neutral axis.

The goal of balancing the wheelbarrow left/right is to keep the centre 22 of gravity of the wheelbarrow as close to the neutral axis 20 as possible.

The thread pattern of the tyre includes a number of grooves 23 mimicking winter tyres.

The mounting position of the wheel 1 allows the connection of various devices, preferably a flange of a towing winch.

The motor 26 is preferably a brushless DC motor and preferably transmits torque directly to the wheel shaft. The motor controller is preferably a controller used to control electric scooters. The wheelbarrow controller is preferably based on a 32-bit microcontroller and preferably has a built-in voltage converter to supply power from a preferably 48 V battery. The wheelbarrow controller receives signals from the sensors and the motor controller. The hand position sensor detects the position of the user's hand and transmits information to the wheelbarrow controller. The hand position sensor is mounted in the shield 6 of the sensor via a damping element 16. The button 7 is preferably a push-button switch 7 and is connected via conductors, which are disposed preferably in a tube of a support frame, to the wheelbarrow controller. The wheelbarrow controller changes the operating mode and emergency stop preferably based on different sequences of button pushes. Based on the axial movement of the arm, the wheelbarrow controller calculates the pushing or pulling force of the arms on the handles. The wheelbarrow controller controls the motor controller preferably via a software-implemented PID control mode. The batteries 28 are preferably formed of lithium cells and preferably have a built-in monitoring system. The batteries 28 preferably include a temperature sensor and provide temperature-related information to the wheelbarrow controller. The accelerometer preferably transmits acceleration data in three directions to the wheelbarrow controller. The gyroscope preferably transmits data on rotation about three axes to the wheelbarrow controller.

## Claims

1. An electric motor driven wheelbarrow comprising:
a container (5);
a frame (2) for the container (5);
a wheel (1) mounted in the middle of the lower part of the frame (2) of the container (5);
a pair of right and left handle supports (25) extending backwards from two sides of the frame (2) of the container (5);
a pair of left and right legs (3), which are an integral part of the frame (2);
an electric motor (26) mounted in said wheel (1), which is adapted to drive or brake the wheelbarrow only when necessary;
two handles (4);
a contactless sensor (27) for detecting the position of a hand that is attached to one of said handle supports (25); and
a control system adapted for monitoring the operation of said electric motor (26) based on motor controller information, detected values of sensors for detecting the position of the user's hand, wheelbarrow position, and allowing a selection of different operating modes according to the sequence of pressing a key.
**characterized by,**
two separate batteries (28) mounted in a protective housing (8) attached to said legs (3);
the two handles (4) overlapping to a limited extent said pair of handle supports (25) and are fixed with respect to said handle supports (25);
a multi-axis acceleration sensor (29) rigidly connected to said frame (2), buttons (7) accessible by a finger while simultaneously holding said handles (4).

2. A wheelbarrow according to claim 1, the control system is adapted to provide feedback on the selected mode of operation via different sequences of wheel movement forwards and backwards.

3. A wheelbarrow according to claim 1, the control system is adapted to enable, based on the data from the sensors, the detection of a cadence of steps and adjusts the power of the drive within the step accordingly.

4. A wheelbarrow according to claim 3, the control system is adapted to enable the detection of inequalities between left and right steps and adjusts the power of the drive accordingly, depending on the left and right steps.

5. A wheelbarrow according to claim 1, the control system is adapted to detect wheel slip, preferably by comparing the acceleration of the wheel with the acceleration of the wheelbarrow, on the basis of which it reduces the motor torque if necessary.

6. A wheelbarrow according to claim 1, the control system is adapted to enables redundant control, wherein in the event that the system detects an illogicality on one input signal compared to at least two other input signals, it is automatically switched to standby mode.

7. A wheelbarrow according to claim 1, the control system is adapted to enables communication, preferably wireless communication with other devices.

8. A wheelbarrow according to claim 1, the batteries are arranged in a way that their centre of gravity is below an axis connecting the point of grip of the hands with the point of contact of the wheel with the ground, preferably as low as possible.

9. A wheelbarrow according to claim 1, comprising a fastening system for fastening to a towing hitch, preferably with an attachment which allows easy fastening and removal of the fastening system which can remain attached to the towing hitch.

10. A wheelbarrow according to claim 9, comprising an electrical plug on the connecting electrical cable for charging the wheelbarrow batteries from a trailer via a type socket.

11. A wheelbarrow according to claim 1, wherein a controller housing is designed to simultaneously form a speaker housing for sound reproduction.

12. A wheelbarrow according to claim 1, having attachment points, preferably on the container frame, which make it possible to attach an external speaker, preferably an active one, to the container, and preferably to supply it with the batteries of the wheelbarrow.

13. A wheelbarrow according to claim 1, which has a standard 12V car socket built into a controller housing.

14. A wheelbarrow according to claim 1, which has a built-in standard car 12V plug with an extension, which allows charging in 12V car sockets via a built-in voltage level converter.

15. A wheelbarrow according to claim 14, having a spiral extension cable, preferably exceeding 1 m and adapted to be stored in the frame during non-use.

16. A wheelbarrow according to claim 1, wherein a tyre profile consists of a number of grooves, preferably identical to the profile of winter tyres for motor cycles.

## Patentansprüche

1. Per Elektromotor angetriebene Schubkarre, umfassend:
einen Behälter (5);
einen Rahmen (2) für den Behälter (5);
ein Rad (1), das in der Mitte des unteren Teils des Rahmens (2) des Behälters (5) montiert ist;
ein Paar von rechten und linken Griffstützen (25), die sich von zwei Seiten des Rahmens (2) des Behälters (5) nach hinten erstrecken;
ein Paar von linken und rechten Streben (3), die ein integraler Teil des Rahmens (2) sind;
einen in dem Rad (1) montierten Elektromotor (26), der dazu geeignet ist, die Schubkarre nur bei Bedarf anzutreiben oder abzubremsen;
zwei Griffe (4);
einen berührungslosen Sensor (27) zum Detektieren der Position einer Hand, die an einer der Griffstützen (25) angebracht ist;
und
ein Steuersystem, das zum Überwachen des Betriebs des Elektromotors (26) basierend auf Motorsteuerungsinformationen, detektierten Werten von Sensoren zum Detektieren der Position der Hand des Benutzers, einer Schubkarrenposition und Ermöglichen einer Auswahl unterschiedlicher Betriebsmodi gemäß der Abfolge eines Drückens einer Taste geeignet ist.
**gekennzeichnet durch**
zwei separate Batterien (28), die in einem Schutzgehäuse (8) montiert sind, das an den Streben (3) angebracht ist;
wobei die zwei Griffe (4) in einem begrenzten Ausmaß das Paar von Griffstützen (25) überlagern und in Bezug auf die Griffstützen (25) fixiert sind;
einen mehrachsigen Beschleunigungssensor (29), der starr mit dem Rahmen (2) verbunden ist,
Knöpfe (7), die durch einen Finger während eines gleichzeitigen Haltens der Griffe (4) zugänglich sind.

2. Schubkarre nach Anspruch 1, wobei das Steuersystem dazu geeignet ist, eine Rückmeldung zu dem ausgewählten Betriebsmodus über unterschiedliche Abfolgen einer Radbewegung vorwärts und rückwärts bereitzustellen.

3. Schubkarre nach Anspruch 1, wobei das Steuersystem dazu geeignet ist, basierend auf den Daten von den Sensoren die Detektion einer Kadenz von Schritten zu ermöglichen, und die Leistung des Antriebs innerhalb des Schritts entsprechend anpasst.

4. Schubkarre nach Anspruch 3, wobei das Steuersystem dazu geeignet ist, die Detektion von Ungleichmäßigkeiten zwischen linken und rechten Schritten zu ermöglichen, und die Leistung des Antriebs abhängig von den linken und rechten Schritten entsprechend anpasst.

5. Schubkarre nach Anspruch 1, wobei das Steuersystem dazu geeignet ist, Radschlupf, vorzugsweise durch Vergleichen der Beschleunigung des Rads mit der Beschleunigung der Schubkarre zu detektieren, auf der Basis dessen es bei Bedarf das Motordrehmoment reduziert.

6. Schubkarre nach Anspruch 1, wobei das Steuersystem dazu geeignet ist, eine redundante Steuerung zu ermöglichen, wobei in dem Fall, dass das System eine Unlogik an einem Eingangssignal im Vergleich zu mindestens zwei anderen Eingangssignalen detektiert, es automatisch in den Bereitschaftsmodus geschaltet wird.

7. Schubkarre nach Anspruch 1, wobei das Steuersystem dazu geeignet ist, eine Kommunikation, vorzugsweise eine drahtlose Kommunikation, mit anderen Vorrichtungen zu ermöglichen.

8. Schubkarre nach Anspruch 1, wobei die Batterien derart angeordnet sind, dass ihr Schwerpunkt unterhalb einer Achse, die den Griffpunkt der Hände mit dem Kontaktpunkt des Rades mit dem Boden verbindet, vorzugsweise so tief wie möglich liegt.

9. Schubkarre nach Anspruch 1, umfassend ein Befestigungssystem zum Befestigen an einer Anhängerkupplung, vorzugsweise mit einer Anbringung, die ein leichtes Befestigen und Entfernen des Befestigungssystems ermöglicht, die an der Anhängerkupplung angebracht bleiben kann.

10. Schubkarre nach Anspruch 9, umfassend einen elektrischen Stecker an dem elektrischen Verbindungskabel zum Laden der Schubkarrenbatterien von einem Anhänger über eine Typensteckdose.

11. Schubkarre nach Anspruch 1, wobei ein Steuerungsgehäuse dazu ausgestaltet ist, gleichzeitig ein Lautsprechergehäuse für eine Klangwiedergabe zu bilden.

12. Schubkarre nach Anspruch 1, die Anbringungspunkte, vorzugsweise an dem Behälterrahmen, aufweist, die es ermöglichen, einen externen Lautsprecher, vorzugsweise einen aktiven, an dem Behälter anzubringen, und vorzugsweise ihn mit den Batterien der Schubkarre zu versorgen.

13. Schubkarre nach Anspruch 1, die eine Standard-12V-Fahrzeugsteckdose aufweist, die in ein Steuerungsgehäuse eingebaut ist.

14. Schubkarre nach Anspruch 1, die einen eingebauten Standard-12V-Fahrzeugstecker mit einer Verlängerung aufweist, der ein Laden in 12V-Fahrzeugsteckdosen über einen eingebauten Spannungspegelwandler ermöglicht.

15. Schubkarre nach Anspruch 14, die ein spiralförmiges Verlängerungskabel aufweist, das vorzugsweise länger als 1 m und dazu geeignet ist, während einer Nichtbenutzung in dem Rahmen gelagert zu werden,.

16. Schubkarre nach Anspruch 1, wobei ein Reifenprofil aus einer Anzahl von Nuten besteht, vorzugsweise identisch zu dem Profil von Winterreifen für Motorräder.

## Revendications

1. Brouette entraînée par moteur électrique, comprenant :
un bac (5) ;
un châssis (2) pour le bac (5) ;
une roue (1) montée au milieu de la partie inférieure du châssis (2) du bac (5) ;
une paire de supports de poignée droit et gauche (25) s'étendant vers l'arrière depuis deux côtés du châssis (2) du bac (5) ;
une paire de pieds gauche et droit (3), qui sont une partie intégrante du châssis (2) ;
un moteur électrique (26) monté dans ladite roue (1), qui est adapté pour entraîner ou freiner la brouette seulement lorsque cela est nécessaire ;
deux poignées (4) ;
un capteur sans contact (27), pour détecter la position d'une main, qui est attaché à un desdits supports de poignée (25) ;
et
un système de commande adapté pour surveiller le fonctionnement dudit moteur électrique (26) sur la base d'informations de contrôleur de moteur, de valeurs détectées de capteurs pour détecter la position de la main de l'utilisateur, d'une position de brouette, et permettre une sélection de différents modes de fonctionnement selon la séquence d'utilisation d'une touche,
**caractérisée par**,
deux batteries séparées (28) montées dans un boîtier de protection (8) attaché auxdits pieds (3) ;
les deux poignées (4) chevauchant, dans une mesure limitée, ladite paire de supports de poignée (25) et étant fixes par rapport auxdits supports de poignée (25) ;
un capteur d'accélération multiaxial (29) rigidement relié audit châssis (2),
des boutons (7) auxquels un doigt peut accéder tout en tenant simultanément lesdites poignées (8).

2. Brouette selon la revendication 1, le système de commande est adapté pour fournir une rétroaction sur le mode sélectionné de fonctionnement par l'intermédiaire de différentes séquences de mouvement de roue vers l'avant et vers l'arrière.

3. Brouette selon la revendication 1, le système de commande est adapté pour permettre, sur la base des données provenant des capteurs, la détection d'une cadence de pas, et ajuste la puissance de l'entraînement pendant le pas en conséquence.

4. Brouette selon la revendication 3, le système de commande est adapté pour permettre la détection d'inégalités entre des pas gauches et droits, et ajuste la puissance de l'entraînement en conséquence, en fonction des pas gauches et droits.

5. Brouette selon la revendication 1, le système de commande est adapté pour détecter un glissement de roue, de préférence en comparant l'accélération de la roue à l'accélération de la brouette, sur la base de quoi il réduit le couple de moteur si nécessaire.

6. Brouette selon la revendication 1, le système de commande est adapté pour permettre une commande redondante, dans laquelle, au cas où le système détecte un illogisme sur un signal d'entrée par rapport à au moins deux autres signaux d'entrée, une changement automatique à un mode d'attente est effectué.

7. Brouette selon la revendication 1, le système de commande est adapté pour permettre la communication, de préférence la communication sans fil, avec d'autres dispositifs.

8. Brouette selon la revendication 1, les batteries sont agencées de manière telle que leur centre de gravité soit en dessous d'un axe reliant le point de préhension des mains au point de contact de la roue avec le sol, de préférence aussi bas que possible.

9. Brouette selon la revendication 1, comprenant un système de fixation pour la fixation à un attelage de remorquage, de préférence avec une attache qui permet la fixation et l'enlèvement aisés du système de fixation qui peut rester attaché à l'attelage de remorquage.

10. Brouette selon la revendication 9, comprenant une fiche électrique sur le câble électrique de connexion pour charger les batteries de brouette depuis une remorque par l'intermédiaire d'une prise typique.

11. Brouette selon la revendication 1, dans laquelle un boîtier de contrôleur est conçu pour simultanément former un boîtier de haut-parleur pour reproduction de son.

12. Brouette selon la revendication 1, ayant des points d'attache, de préférence sur le châssis de bac, qui permettent d'attacher un haut-parleur externe, de préférence un haut-parleur actif, au bac, et de préférence pour l'alimenter avec les batteries de la brouette.

13. Brouette selon la revendication 1, qui a une prise de voiture 12 V standard incorporée dans un boîtier de contrôleur.

14. Brouette selon la revendication 1, qui a une fiche 12 V de voiture standard incorporée, avec une extension, qui permet la charge dans des prises de voiture 12 V par l'intermédiaire d'un convertisseur de niveau de tension incorporé.

15. Brouette selon la revendication 14, ayant un câble d'extension en spirale, de préférence de plus de 1 m et adapté pour être rangé dans le châssis durant la non-utilisation.

16. Brouette selon la revendication 1, dans laquelle un profil de pneu est constitué d'un nombre de rainures, de préférence identique au profil de pneus d'hiver pour des motocycles.
